# EUROPÄISCHE PATENTSCHRIFT

(11) **EP 3 026 288 B1**
(45) Veröffentlichungstag und Bekanntmachung des Hinweises auf die Patenterteilung: **29.11.2017**
(21) Anmeldenummer: 15175233.4
(22) Anmeldetag: 03.07.2015
(51) Int. Cl.: F16D 65/12, C23C 4/08, C23D 5/02, C23D 7/00, C23F 17/00

(54) **VERFAHREN ZUR HERSTELLUNG EINER BREMSSCHEIBE SOWIE BREMSSCHEIBE**
METHOD FOR PRODUCING A BRAKE DISC AND A BRAKE DISC
PROCÉDÉ DE FABRICATION D'UN DISQUE DE FREIN ET DISQUE DE FREIN

(30) Priorität: 24.07.2014 DE 102014214508
(43) Veröffentlichungstag der Anmeldung: 01.06.2016
(73) Patentinhaber: Ford Global Technologies, LLC, Dearborn, MI 48126 (US)
(72) Erfinder: Broda, Maik, 52146 Würselen (DE); Verpoort, Clemens Maria, 40789 Monheim (DE); Grabiec, Tomasz Pawel, 51427 Bergisch Gladbach (DE)
(74) Vertreter: Dörfler, Thomas

(56) Entgegenhaltungen:
- WO-A2-2015/059011
- DE-A1- 4 122 763
- DE-A1- 10 306 919
- DE-A1-102005 008 569
- DE-A1-102005 022 264
- DE-A1-102006 050 985
- DE-A1-102008 035 849
- DE-A1-102009 003 161

## Beschreibung

Die vorliegende Erfindung betrifft ein Verfahren zur Herstellung einer Bremsscheibe für ein Fahrzeug sowie eine Bremsscheibe für ein Fahrzeug nach Anspruch 8.
In den Veröffentlichungen RAL, Deutsches Institut für Gütesicherung und Kennzeichnung e.V. ,2007; PETZOLD, Armin; PÖSCHMANN, Helmut, Email und Emailliertechnik, Dt. Verlag für Grundstoffindustrie, 1992 und Dietzel, Adolf H.; Emaillierung, Berlin, Springerverlag 1981, Seite 1,2; S.38 bis 42 und S. 276 sind Emaillen, deren Bestandteile und deren Herstellung und auch Emaillierverfahren offenbart.
Die DE 41 22 763 A1 befasst sich mit Emailschlicker und offenbart ein Verfahren zur Emaillierung von aluminiumbeschichtetem Stahlblech, wobei auch emailliertes Stahlblech offenbart wird. Der Emailschlicker wird getrocknet und bei 800 bis 850°C eingebrannt. Je nach Zusammensetzung der Emaille können so dekorative Beschichtungen erhalten werden, welche aufgrund ihrer Rauigkeit z.B. für Schultafeln oder als selbstreinigende Emailschichten hervorragend geeignet seien. Jedoch gibt die DE 41 22 763 A1 keinerlei Hinweise, dass eine Bremsscheibe eine solche Emaille-Beschichtung aufweisen könnte.
Bei Fahrzeugen, insbesondere bei Kraftfahrzeugen, bilden Scheibenbremsen die wohl am weitesten verbreitete Bauart von Bremsanlagen. Scheibenbremsen setzen sich im Wesentlichen aus einer Bremsscheibe und einem die Bremsscheibe randseitig umgreifenden Bremssattel zusammen. Hierbei ist die Bremsscheibe über eine drehbar im Achsschenkel gelagerte Radnabe mit dem abzubremsenden Rad des Fahrzeugs verbunden. Demgegenüber ist der Bremssattel an dem Achsschenkel fixiert. Die eigentliche Verzögerung wird durch an die Bremsscheibe anlegbare Bremsklötze erreicht, welche zu beiden Seiten der Bremsscheibe zwischen ihr und dem Bremssattel angeordnet sind.

Je nach Anwendungsfall können Bremsscheiben sowohl aus Eisen aber auch aus Karbon-Keramik oder Aluminium bestehen. Aus Eisen, näherhin aus Grauguss, hergestellte Bremsscheiben sind zwar überaus verbreitet, weisen aber die bekannte Problematik des Oberflächenrostes auf. Zudem ergibt sich eine mitunter schädigende Wirkung in Kombination mit Aluminium-Felgen, in deren Oberfläche sich die beim Bremsvorgang lösenden heißen Eisenpartikel förmlich einbrennen können.

Insgesamt sollten Bremsscheiben eine möglichst verschleißarme sowie wenig Feinstaub abgebende Bremsoberfläche aufweisen. Um dies zu erreichen, wird deren möglichst harte Oberflächenausbildung angestrebt. So wird beispielsweise bei Bremsscheiben aus Aluminium entsprechend Siliziumkarbid (SiC) zugesetzt, welche sich als verschleißfeste Schutzschicht an der Oberfläche ausscheiden. Allerdings ist die Herstellung von Bremsscheiben aus nicht-eisenhaltigen Werkstoffen mitunter schwierig und zumeist kostenintensiv.

Eine andere Form der Ausbildung einer solchen Schutzschicht kann mit thermischem Spritzen erreicht werden. Hierbei wird das auf die Oberfläche eines Basiskörpers der Bremsscheibe aufzutragende Material zuvor durch Hitzeeinwirkung erweicht und in Form einzelner Partikel über einen Gasstrom beschleunigt. Beim Auftreffen der Partikel entsteht eine rein mechanische Verbindung ohne Aufschmelzen der Oberfläche des Basiskörpers. Bei den Materialien kann es sich um Metalle sowie oxidkeramische oder karbidische Werkstoffe handeln. Nachteilig hierbei ist neben den hohen Kosten insbesondere die Haltbarkeit derartiger Schutzschichten. So ist zumeist nur eine mäßige Aufrauhung der Oberfläche mittels Sandstrahlen, insbesondere Korundstrahlen möglich, was zu keiner dauerhaft haltbaren mechanischen Verbindung führt. Speziell bei der Verwendung von hartem Gusseisen (Grauguss; GG) für den Basiskörper ist beispielsweise ein an sich vorteilhaftes Schwalbenschwanz-förmiges Aufrauen nicht möglich.

In einer auf die Anmelderin zurückgehenden Anmeldung DE 10 2013 221 737.4 (welche der WO2015/059 011 A2 entspricht) wird ein Verfahren zur Herstellung einer Bremsscheibe aufgezeigt, welches die Anordnung einer oxydischen Email-Beschichtung auf deren Reibflächen vorsieht. Diese wird in den Grundwerkstoff der Bremsscheibe eingebrannt, um eine metallurgische Verbindung durch Phasenbildung zu erreichen. In ihrer Anordnung dient die Email-Beschichtung als Verschleiß- und Korrosionsschutzschicht. Hierbei ist allerdings zu beachten, dass die thermische Belastung derartig ausgestatteter Bremsscheiben begrenzt ist. Grund hierfür ist der Glaserweichungspunkt oxydischer Email-Beschichtungen von ungefähr 650°C. Sofern entsprechende Temperaturen durch anspruchsvolle Bremsmanöver erreicht werden, kann besagte Email-Beschichtung zu kriechen und/oder zu fließen beginnen. Dies liegt im Wesentlichen an der hohen Flächenpressung der mit den Reibflächen in Kontakt kommenden Bremsbeläge bei gleichzeitiger Erweichung der Email-Beschichtung.

So ist bekannt, dass durch Bremsungen verursachte Temperaturen der Bremsscheiben durchaus eine Höhe von 700°C erreichen können. Zum Prüfen von Bremsscheiben müssen diese heutzutage daher den sogenannten Auto-Motor-Sport Test (AMS) durchlaufen. Dieser sieht 10 unmittelbar aufeinanderfolgende Bremszyklen vor, in denen ein mit den zu testenden Bremsscheiben ausgestattetes Fahrzeug abwechselnd auf 115 km/h beschleunigt und anschließend mit maximaler Bremskraft bis zu seinem Stillstand abgebremst wird.

Aus der DE 10 2005 022 264 A1 und der DE 10 2006 050 985 A1 geht die Möglichkeit hervor, eine Nickelbasis-Beschichtung z.B. NiCrBSi-Beschichtung oder eine NiCrB- oder NiBSi-Beschichtung auf einem Substrat aus Stahl auszubilden. Hierzu wird ein Vermischen der metallischen Pulver mit einem Bindemittel, also mit einer in Pulverform vorliegenden Emaille vorgeschlagen, wobei das entstehende Gemisch, also ein Einschmelzschlicker beispielsweise durch Sprühen oder Tauchen auf die Oberfläche des Substrats aufgebracht wird. Bei der anschließenden Trocknung wird der Wasseranteil des Gemisches entfernt, woraufhin eine Erwärmung des so vorbereiteten Substrats auf mehr als 1000°C erfolgt. Das hierdurch durchgeführte Einsintern des Gemisches kann sowohl in einem Ofen als auch durch offene Flammen oder durch Induktionsspulen erfolgen. Gegenüber anderen Beschichtungsverfahren durch reinen Auftrag ist hierbei wesentlich, dass sich eine metallurgische Verbindung zwischen der Beschichtung und der Oberfläche des Substrats einstellt.

Auch in der DE 10 2005 008 569 A1 ist das Auftragen einer Nickel-Basislegierung auf die Reibflächen einer Bremsscheibe offenbart, wobei eine selbstfließende Pulverlegierung auf Nickelbasis durch thermisches Spritzen auf die Bremsscheibe aufgetragen wird, da so bereits vor dem Einschmelzen eine gewisse Grundhaftung vorläge. Nachdem die Bremsscheibe auf Maß gebracht wurde, also vor dem thermischen Beschichten, würden die zu beschichtenden Flächen lediglich sandgestrahlt, um die Oberflächenrauigkeit zu erhöhen, so dass somit gute Voraussetzungen für eine gute Haftung der Spritzschicht schaffbar seien. Als Legierung wird ebenfalls eine NiCrBSi-Beschichtung aufgebracht.

Die aus den vorgenannten Druckschriften hervorgehende Beschichtung ist im Zusammenhang mit Bremsscheiben allerdings als kritisch anzusehen, da berechtigte Gesundheitsbedenken hinsichtlich des beim Bremsen freiwerdenden Nickelstaubes (Feinstaub) bestehen. Insofern ist eine solche ansonsten vorteilhafte Beschichtung für Bremsscheiben ungeeignet.

In der DE 10 2009 003 161 A1 ist offenbart, dass eine Leichtmetallbremsscheibe eine mittels PTWA (plasma transfer wire arc) aufgebrachte thermische Spritzschicht hat. Die Spritzschicht, also die wärmedämmende Reibschicht ist aus einer Nanokristalle aufweisenden Metall-Legierung gebildet.

In der DE 103 06 919 A1 wird ein Verbundwerkstoff aus intermetallischen Phasen und Keramik, sowie ein Herstellungsverfahren vorgestellt. Der Verbundwerkstoff wird mittels Lichtbogendrahtspritzverfahren aufgetragen, wobei der Anteil der Keramik bei 20 bis 70Vol% liegen soll, wobei Metallgehalte von unter 5Vol% für so genannte Triboschichten offenbart sind. Triboschichten sind im Sinne der DE 103 06 919 A1 Reibschichten für Brems- oder Kupplungsscheiben, wobei die Triboschichten eine Schichtdicke von 0,5 bis 5mm haben können. Schutzpanzerungen aus dem in der DE 103 06 919 A1 offenbarten Verbundwerkstoff haben eine Dicke von 3 bis 50mm.

Weitere im Stand der Technik bekannten Verfahren sehen zumeist die Ausbildung einer an sich vorteilhaften Oxid-Schicht auf der Oberfläche des jeweiligen Bauteils vor. Diese trägt zur Erhöhung der Verschleißfestigkeit bei und liefert einen kathodischen Schutz gegenüber weiterem korrosivem Angriff. Hierzu wird der Werkstoff des Bauteils selbst einer geeigneten Prozedur unterzogen, durch welche sich die gewünschte Oxid-Schicht auf Basis des jeweiligen Werkstoffs ausbilden kann.

Da es sich bei Bremsscheiben um in Massen hergestellte Verschleißartikel handelt, werden diese primär aus Eisen, insbesondere aus Gusseisen gefertigt. Dabei ist die Ausbildung von Eisenoxid allerdings eher unerwünscht. So handelt es sich bei der Bildung von Oxid auf Basis des Eisens um einen korrosiven Vorgang, welcher die Bremsscheibe mit der Zeit zerstört. Neben der bereits durch leichten Flugrost verschlechterten Optik führt dieser nicht selten zu einer akustischen Beeinträchtigung, welche sich in unangenehmem Quietschen äußert.

Die bisher bekannten und auf galvanische oder Spritzverfahren zurückgehenden Beschichtungen erlauben derzeit noch keine Möglichkeit zur Herstellung von dauerhaft verschleiß- und korrosionsbeständigen Bremsscheiben, insbesondere aus Gusseisen. Dies gilt auch für deren anzustrebenden optimalen Reibwerte für eine ausreichende Verzögerung. Angesichts des aufgezeigten Standes der Technik bietet die einfache Fertigung von insgesamt haltbareren Bremsscheiben als Massenartikel daher durchaus noch Raum für Verbesserungen.

Vor diesem Hintergrund liegt der Erfindung die Aufgabe zugrunde, ein Verfahren zur Herstellung einer Bremsscheibe sowie eine Bremsscheibe für ein Fahrzeug vorzustellen, welche eine kostengünstige und leicht in vorhandene Abläufe integrierbare Fertigung ermöglicht, wobei die Bremsscheibe selbst alle Anforderungen an deren sichere Funktion über einen langen Zeitraum erfüllt.

Der verfahrensmäßige Teil der Aufgabe findet seine Lösung in den Maßnahmen des Anspruchs 1. Der gegenständliche Teil dieser Aufgabe wird durch eine Bremsscheibe mit den Merkmalen des Anspruchs 8 gelöst. Weitere, besonders vorteilhafte Ausgestaltungen der Erfindung offenbaren die jeweiligen Unteransprüche.

Die Beschreibung charakterisiert und spezifiziert die Erfindung insbesondere im Zusammenhang mit den Figuren zusätzlich.
Gemäß der Erfindung wird nachfolgend ein Verfahren zur Herstellung einer Bremsscheibe für ein Fahrzeug vorgestellt, bei welchem auf einem Basiskörper der Bremsscheibe eine Email-Beschichtung ausgebildet wird. Erfindungsgemäß beinhaltet die Herstellung wenigstens die folgenden Schritte:
- Aufrauen der Reibflächen (7,8)
- Ausbilden einer mit dem Basiskörper (2) metallurgisch verbindbaren Metall-Beschichtung (10) als korrosions- und/oder verschleißbeständige Beschichtung auf den aufgerauten Reibflächen (7,8);
- Aufbringen eines Email-Schlickers als Korrosionsschutzbeschichtung in einem Übergang zwischen den Reibflächen (7,8) und der ausgestellten Verbindungsfläche (5);
- Trocknen des aufgebrachten Email-Schlickers; und
- Erhitzen des mit der Metall-Beschichtung (10) und dem getrockneten Email-Schlicker versehenen Basiskörpers (2) zur Ausbildung der Email-Beschichtung (12) und zur metallurgischen Verbindung der Metall-Beschichtung (10) mit dem Basiskörper (2).
Der sich hieraus ergebende Vorteil liegt in der Kombination der vorteilhaften Eigenschaften der Metall-Beschichtung und der Email-Beschichtung. Dabei dient die Metall-Beschichtung im Wesentlichen als Verschleißbeschichtung, während die Email-Beschichtung als Korrosionsbeschichtung fungiert. Hierbei ist zu erwähnen, dass die Metall-Beschichtung gleichzeitig ebenfalls als Korrosionsbeschichtung dient, da diese ein etwaiges Rosten des Basiskörpers sicher verhindert. Insofern können sowohl optische als auch zu Geräuschen (Grind-Noise-Reduktion) führende Beeinträchtigungen mangels Rostanfälligkeit auch nach längerer Standzeit sicher ausgeschlossen werden.

Bei der Metall-Beschichtung kann es sich bevorzugt um eine Legierung auf Fe- oder FeCr-Basis handeln. Weiterhin kann die Metall-Beschichtung auch aus einem FeCrMn-Stahl gebildet sein.

Besonders bevorzugt kann die Metall-Beschichtung eine FeCrBSi-Beschichtung sein. Bei einer solchen FeCrBSi-Beschichtung handelt es sich um eine sogenannte "selbstfließende" Legierung. Deren Eigenschaften sehen ein Einschmelzen und Verdichten durch Flüssigphasensintern bei Erreichen des Schmelzpunktes vor. Anschließend steigt deren Schmelzpunkt wieder an, da sich das oder die den Schmelzpunkt absenkenden Elemente wie beispielsweise Silicium (Si) durch Diffusion verteilen und/oder verdünnen.

Erfindungsgemäß wird durch die Metall-Beschichtung eine korrosionsbeständige und/oder verschleißbeständige Schicht bzw. Beschichtung gebildet, deren Haftung auf dem Basiskörper durch deren metallurgische Anbindung deutlich verbessert ist. Auf diese Weise ist eine etwaige Unterwanderung der Metall-Beschichtung beispielsweise durch eine Unterkorrosion sicher verhindert.

Durch die Erhitzung (Einsintern) des Email-Schlickers - beispielsweise bei einer Temperatur von 840°C für 10 bis 20 Minuten - wird gleichzeitig auch die Qualität der Metall-Beschichtung verbessert. So kann der Basiskörper auf eine konstante Glühtemperatur gebracht werden, wobei der Email-Schlicker aufschmilzt und sich mit der Oberfläche des aus Gusseisen gefertigten Basiskörpers verbindet. Im Ergebnis wurde beobachtet, dass sich die Haftfestigkeit und die Schichtqualität der Beschichtungen durch die Erhitzung deutlich verbessern. Insofern kann ein etwaiges Ablösen oder Abplatzen insbesondere der Email-Beschichtung im Betrieb sicher ausgeschlossen werden.

Je nach Anforderung kann es sich bei dem verwendeten Email-Schlicker um einen solchen handeln, welcher einen entsprechend der angestrebten Sintertemperatur entsprechenden Schmelzpunkt aufweist.

Als Schlicker oder Email-Schlicker wird im Sinne der Erfindung die Ausgangsbasis für die anzuordnende Email-Beschichtung verstanden. Hierbei kann es sich bevorzugt um eine Masse in Form eines Mineralgemisches handeln, welches in einer flüssigen, breiigen bis zähflüssigen Konsistenz vorliegt und in geeigneter Weise auf den oder die aufgerauten Teile des Kopfbereiches aufgetragen wird.

Für den Auftrag ist beispielsweise ein Kontakt- oder kontaktloses Verfahren in Bezug auf den Einsatz eines Auftragsmittels denkbar. So kann der Email-Schlicker beispielsweise unter Zuhilfenahme einer Auftragsrolle oder eines Auftragspinsels aufgetragen werden. Weiterhin kann der Auftrag beispielsweise durch Sprühen, insbesondere durch Airless-Sprühen erfolgen. Gegebenenfalls ist auch ein zumindest teilweises Eintauchen des Basiskörpers in den Email-Schlicker denkbar.

Erfindungsgemäß ist die Metall-Beschichtung zumindest auf die einander abgewandten Reibflächen des Reibrings der Bremsscheibe angeordnet. Bei den Reibflächen handelt es sich um jene Kreisringflächen des Basiskörpers, welche für einen Kontakt mit den daran anlegbaren Bremsbelägen vorgesehen sind. Insofern kann sich der oder können sich die aufgerauten Bereiche der Oberfläche des Basiskörpers auf jene mit der Metall-Beschichtung auszustattenden Teile beschränken, also auf die Reibflächen. Dank der Metall-Beschichtung ergibt sich keinerlei gesundheitsbedenklicher Abrieb hinsichtlich der zuvor bereits angesprochenen Freisetzung von Nickel. Durch die vor Korrosion und Verschleiß schützende Wirkung der Metall-Beschichtung können nunmehr hohe Standzeiten für eine so hergestellte Bremsscheibe erreicht werden.

Was nun die Email-Beschichtung angeht, so kann diese sich bevorzugt auf nicht mit der Metall-Beschichtung versehene Teile des Basiskörpers erstrecken. So liegt der besondere Vorteil der als Korrosionsschutz agierenden Email-Beschichtung in ihrer Fähigkeit, auch nicht unmittelbar zugängliche Bereiche des Basiskörpers zu erreichen. Dies ist insbesondere bei belüfteten, insbesondere innenbelüfteten Bremsscheiben von Vorteil. Derartige Bremsscheiben weisen regelmäßig zwei parallel zueinander beabstandete Deckscheiben auf, an denen jeweils eine der Reibflächen angeordnet ist. Die Deckscheiben sind dabei über sich zwischen diesen erstreckenden Rippen miteinander verbunden. Hierdurch wird eine große Oberfläche des Basiskörpers erzeugt, um die beim Bremsen entstehende Wärme an die Umgebung abzugeben.

Hier ist es dem Email-Schlicker aufgrund seiner fließfähigen, bevorzugt wässrigen Konsistenz ohne weiteres möglich, die Bereiche zwischen den Deckscheiben und den Rippen zu benetzen. Durch das anschließende Erhitzen kann daher in diesen ansonsten nicht direkt zugänglichen Bereichen die vorteilhafte Email-Beschichtung als Korrosionsschutz ausgebildet werden.

Weiterhin wird der Email-Schlicker erfindungsgemäß in dem Übergangsbereich zwischen dem Reibring und der ausgestellten Verbindungsfläche (Hut) des Basiskörpers aufgetragen. Das Auftragen des Email-Schlickers kann dabei ohne eine etwaige Maskierung der Oberfläche des Basiskörpers erfolgen, so dass sich durchaus eine beispielsweise einige Millimeter breite Überlappung zwischen der Email-Beschichtung und der Metall-Beschichtung auf den Reibflächen einstellen kann. Bis auf die mögliche, geringe Überlappung ist die Metall-Beschichtung also frei von der Email-Beschichtung.

Gemäß einer vorteilhaften Weiterbildung des grundsätzlichen Erfindungsgedankens kann die Metall-Beschichtung durch ein thermisches Beschichtungsverfahren ausgebildet werden. Besonders bevorzugt kann hierfür ein bekanntes Hochgeschwindigkeits-Flammspritzen (HVOF) eingesetzt werden. Bei diesem wird ein geeignetes Beschichtungs-Pulver, beispielsweise ein FeCrBSi-Pulver mit hoher Geschwindigkeit zu einer dichten Schicht auf den zu beschichtenden Oberflächenbereichen des Basiskörpers aufgebracht.

Alternativ oder in Ergänzung hierzu kann es sich bei dem thermischen Beschichtungsverfahren selbstverständlich auch beispielsweise um Plasmaspritzen, Flamm-Pulverspritzen oder ein Lichtbodendrahtspritzverfahren handeln. Gegenüber dem zumeist in Pulverform stattfindenden Auftrag können bei letzterem Verfahren entsprechende Fülldrähte in Drahtform Verwendung finden.

Weiterhin sieht die Erfindung vor, dass die Metall-Beschichtung in einer Schichtdicke von 150 µm bis 350 µm auf dem Basiskörper ausgebildet werden kann. Die zu wählende Schichtdicke kann beispielsweise auf Grundlage einer möglichen Nachbearbeitung der Metall-Beschichtung eine eher mächtigere Schichtdicke gewählt werden. So kann die Schichtdicke beispielsweise 150 µm betragen, sofern keine weitere oberflächliche Bearbeitung angedacht ist. Demgegenüber kann die Schichtdicke bis zu 350 µm betragen, sofern die Metall-Beschichtung einer anschließenden Nachbearbeitung unterzogen werden soll, um deren Oberflächenbeschaffenheit anzupassen und/oder zu verbessern.

Nach einer bevorzugten Maßnahme der Erfindung kann zum Aufrauen des Basiskörpers beispielsweise ein Haftgewinde in dessen zu beschichtenden Oberflächenbereich eingebracht werden. Unter einem Haftgewinde wird eine spanabhebend in die Oberfläche eingebrachte Struktur verstanden, welche eine Verankerung der auszubildenden Beschichtung/-en ermöglicht. Alternativ oder in Ergänzung hierzu kann der zu beschichtende Oberflächenbereich durch Sandstrahlen vorbehandelt werden. Bevorzugt wird hierfür Korundstrahlen verwendet, um die Oberfläche des Basiskörpers entsprechend zu aktivieren. In jedem Fall dient die Oberflächenbehandlung des Basiskörpers dazu, den Verbund zwischen Beschichtung/-en und Basiskörper zu verbessern.

Bevorzugt sieht die Erfindung vor, dass das Trocknen des aufgetragenen Email-Schlickers in einem Ofen durchgeführt werden kann. Auf diese Weise lassen sich der Trocknungsprozess und damit der Herstellungsprozess insgesamt beschleunigen. Zudem können die Trocknungszeiten aufgrund der so kontrollierbaren Trocknung genau festgelegt und mit den weiteren Maßnahmen zeitlich genau abgestimmt werden. Besonders bevorzugt kann die Trocknung bei einer Temperatur von 90°C durchgeführt werden.

Nach einer besonders vorteilhaften Weiterbildung der Erfindung kann das Erhitzen des mit der Metall-Beschichtung und dem getrockneten Email-Schlicker versehenen Basiskörpers in einem Temperaturbereich von 800°C bis 900°C durchgeführt werden. Das Erhitzen kann beispielsweise in einem geeigneten Ofen erfolgen. Weiterhin kann das Erhitzen in vorteilhafter Weise unter Einsatz eines Schutzgases erfolgen. Durch die Erhitzung unter Schutzgas kann in diesem Temperaturbereich die Bildung von Zunder- und Anlaufschichten wirksam verhindert werden. Alternativ oder in Ergänzung hierzu kann das Erhitzen mittels einer oder mehrerer Induktionsspulen durchgeführt werden.

Üblicherweise müsste das Einsintern einer Beschichtung beispielsweise aus FeCrBSi bei ungefähr 1120 °C erfolgen. Allerdings würde hierbei die Verzunderung unbeschichteter Oberflächenbereiche ansteigen und gleichzeitig die Materialfestigkeit des metallischen Basiskörpers der Bremsscheibe stark absinken. Im Ergebnis würden sich nicht tolerierbare Verformungen des Basiskörpers einstellen, welche nur durch aufwändige und entsprechend kostenintensive Nachbearbeitungen ausgeglichen werden könnten.

Hier macht sich die Erfindung die überraschende Erkenntnis zunutze, dass beispielsweise die Schicht aus FeCrBSi bei dem angestrebten Temperaturbereich von 800°C bis 900°C zwar noch keinen Übergang zum Flüssigphasen-Sintern zeigt, allerdings bereits eine deutlich verbesserte Haftfestigkeit auf der Oberfläche des Basiskörpers zeigt. Ursächlich hierfür sind in diesem Temperaturbereich bereits auftretende Diffusionsvorgänge, durch welche die Haftung von typischerweise 40 MPa auf über 70 MPa angehoben werden kann. Überdies zeigt sich bei diesen Temperaturen bereits eine beginnende Sinterung der Schicht aus FeCrBSi.

Wie bereits zuvor in Bezug auf die mögliche Schichtdicke der Metall-Beschichtung angesprochen, kann bevorzugt eine nach deren Ausbildung durchzuführende mechanische Nachbearbeitung dieser erfolgen. Hierdurch lässt sich eine überaus hohe Maßhaltigkeit in den Endabmessungen der Bremsscheibe erreichen.

Durch das nunmehr vorgestellte Hybrid-Beschichtungsverfahren können Bremsscheiben mit einer hohen Lebensdauer hergestellt werden, welche für Fahrleistungen von mehr als 240000 km ausreichend sein sollten. Hier ist es insbesondere die Nutzung des aufgezeigten Hybrid-Beschichtungsverfahrens, welches die vorteilhaften Eigenschaften der Metall-Beschichtung und der Email-Beschichtung miteinander kombiniert, wobei die Email-Beschichtung nicht als Deckschicht zu verstehen ist, welche auf die Metall-Beschichtung aufgetragen wird. Vielmehr überdeckt die Email-Beschichtung metallbeschichtungsfreie Oberflächenbereiche der Bremsscheibe, wobei lediglich ein minimaler Überlappungsbereich beider Schichten vorhanden ist. Erfindungsgemäß ist dabei vorgesehen, dass die Bremsscheibe sowohl mit dem getrockneten Email-Schlicker als auch mit der Metall-Beschichtung nur einer Wärmbehandlung, nämlich dem Erhitzen bevorzugt im Ofen insbesondere unter Schutzgasatmosphäre unterzogen wird. Im Ergebnis werden somit nicht rostende Bremsscheiben aus Eisenguss erzeugt, welche zudem eine hohe Verschleißbeständigkeit aufweisen.

Weiter betriff die Erfindung eine Bremsscheibe, welche durch das zuvor erläuterte Verfahren hergestellt wird. Nachfolgende Ausführungen zu der erfindungsgemäßen Bremsscheibe sind demnach im Zusammenhang mit dem erfindungsgemäßen Verfahren zu sehen, so dass sich dessen Merkmale grundsätzlich mit denen der nachfolgend beschriebenen Bremsscheibe vereinen lassen.
Bei der in Rede stehenden Bremsscheibe handelt es sich bevorzugt um eine solche für ein Fahrzeug, insbesondere für ein Kraftfahrzeug. Die Bremsscheibe umfasst einen Basiskörper, auf welchem bereichsweise eine Email-Beschichtung ausgebildet ist. Besonders bevorzugt kann der Basiskörper aus Gusseisen gebildet sein. Erfindungsgemäß ist zusätzlich zu der Email-Beschichtung eine weitere Beschichtung auf wenigstens einem oder weiteren Bereichen der Oberfläche des Basiskörpers ausgebildet. Bei besagter Beschichtung handelt es sich nach der Erfindung um eine Metall-Beschichtung, welche metallurgisch mit dem Basiskörper verbunden ist.
Die sich aus der zuvor aufgezeigten erfindungsgemäßen Bremsscheibe und den nachfolgend beschriebenen Merkmalen ergebenden Vorteile wurden bereits zuvor im Zusammenhang mit dem erfindungsgemäßen Verfahren erläutert und gelten für die erfindungsgemäße Bremsscheibe entsprechend. Aus diesem Grund wird an dieser Stelle auf die vorherigen Ausführungen hierzu verwiesen.
In Bezug auf die Zusammensetzung der Email-Beschichtung kann diese sich beispielsweise aus wenigstens einem glasbildenden Oxid nebst wenigstens einem weiteren Bestandteil und bedarfsweise zusätzlich aus mindestens einem Trübungsmittel zusammensetzen.

Bei der möglichen Gruppe an glasbildenden Oxiden kann es sich beispielsweise um wenigstens eines der folgenden handeln:
- Siliciumdioxid (SiO₂)
- Bortrioxid (B₂O₃)
- Natriumoxid (Na₂O)
- Kaliumoxid (K₂O)
- Aluminiumoxid (Al₂O₃).
Selbstverständlich ist diese Aufzählung nicht abschließend, so dass auch weitere glasbildende Oxide denkbar sind.

In Bezug auf den wenigstens einen weiteren Bestandteil kann dieser beispielsweise aus folgender Gruppe stammen:
- Borax
- Feldspat
- Quarz
- Fluorid
- Soda
- Natriumnitrat.

Auch hierbei gilt, dass diese Aufzählung nicht abschließend ist, so dass auch weitere Bestandteile denkbar sind.

Was die bedarfsweise Zugabe mindestens eines Trübungsmittels angeht, kann dieses beispielsweise aus folgender Gruppe ausgewählt sein:
- Titan (Ti)
- Zirconium (Zr)
- Molybdän (Mo).

Dabei handelt es sich ebenfalls um keine abschließende Aufzählung, so dass auch andere Trübungsmittel wie beispielsweise Zinnoxid oder Titansilikat denkbar sind.

Bei der erfindungsgemäßen Email-Beschichtung handelt es sich bevorzugt um ein Schmelzgemisch. Bei der Emailtemperatur schmelzen die glasbildenden Oxide zu einer Glasschmelze zusammen. Grundemails weisen ca. 23 - 34 Gew% (Gewichtsprozente) Borax, 28 - 52 Gew% Feldspat, 5 - 20 Gew% Quarz, ca. 5 Gew% Fluorid, sowie als Rest Soda und Natriumnitrat auf. Als Trübungsmittel können wie bereits erwähnt die Oxide von Ti, Zr und Mo dienen.

Weiterhin können auch keramische Pigmente wie z.B. Eisenoxide, Chromoxide und Spinelle enthalten sein.

Um die Haftung auf metallischem Untergrund des Basiskörpers zu verbessern, kann die erfindungsgemäße Email-Beschichtung ferner beispielsweise auch wenigstens ein Oxid der nachfolgenden Gruppe enthalten:
- Cobaltoxid
- Manganoxid
- Nickeloxid.

Die genannten Stoffe werden in bevorzugter Ausgestaltung fein gemahlen und geschmolzen. Die Schmelze wird abgeschreckt, also bevorzugt in Wasser gegeben, wobei die so entstehende körnige glasartige Fritte im sich anschließenden Schritt wieder fein gemahlen wird. Bei dem Mahlvorgang werden beispielsweise 30 % bis 40 % Wasser zusammen mit Ton und Quarzmehl zugesetzt. Je nach Art des Emails kommen noch die erwähnten Trübungsstoffe und Farboxide hinzu.

So wird ein Emailschlicker gebildet, welcher zur besseren Mischung einige Zeit, bevorzugt einige Tage ruhen sollte, bevor der Emailschlicker weiterverwendet würde. Durch Verwendung geeigneter Stellmittel wird sichergestellt, dass sich eine gleichmäßige Schichtdicke ergibt.

Eine vorteilhafte Weiterbildung der erfindungsgemäßen Bremsscheibe sieht vor, dass die Metall-Beschichtung eine Haftfestigkeit zur Oberfläche des Basiskörpers von größer als 70 MPa aufweist, worauf bereits oben eingegangen wurde.

Erfindungsgemäß ist die Metall-Beschichtung an voneinander abgewandten Reibflächen eines Reibrings des Basiskörpers angeordnet. Demgegenüber ist die Email-Beschichtung in dem Übergangsbereich zwischen dem Reibring und der ausgestellten Verbindungsfläche (Hut) des Basiskörpers ausgebildet. Hierbei ist denkbar, dass die Email-Beschichtung durchaus eine beispielsweise einige Millimeter breite Überlappung zu der Metall-Beschichtung auf den Reibflächen hin aufweisen kann. Zudem kann die Email-Beschichtung auch an der ausgestellten Verbindungsfläche angeordnet sein.

Insbesondere bei belüfteten Bremsscheiben mit zwei über Rippen zueinander beabstandeten Deckscheiben ist vorgesehen, dass die Email-Beschichtung in den Bereichen zwischen den Deckscheiben und den Rippen angeordnet sein kann, so dass der Innenbereich mit der Email-Beschichtung versehen ist.

Weitere vorteilhafte Einzelheiten und Wirkungen der Erfindung sind im Folgenden anhand von unterschiedlichen, in den Figuren dargestellten Ausführungsbeispielen näher erläutert. Es zeigen:
- Fig. 1: eine schematische Darstellung einer erfindungsgemäßen Bremsscheibe in einer Ansicht,
- Fig. 2: einen Teilschnitt durch die erfindungsgemäße Bremsscheibe aus Fig. 1 in vertikaler Richtung sowie
- Fig. 3: eine alternative Ausgestaltungsform der Bremsscheibe aus den Fig. 1 und 2 in einer perspektivischen Darstellungsweise.,

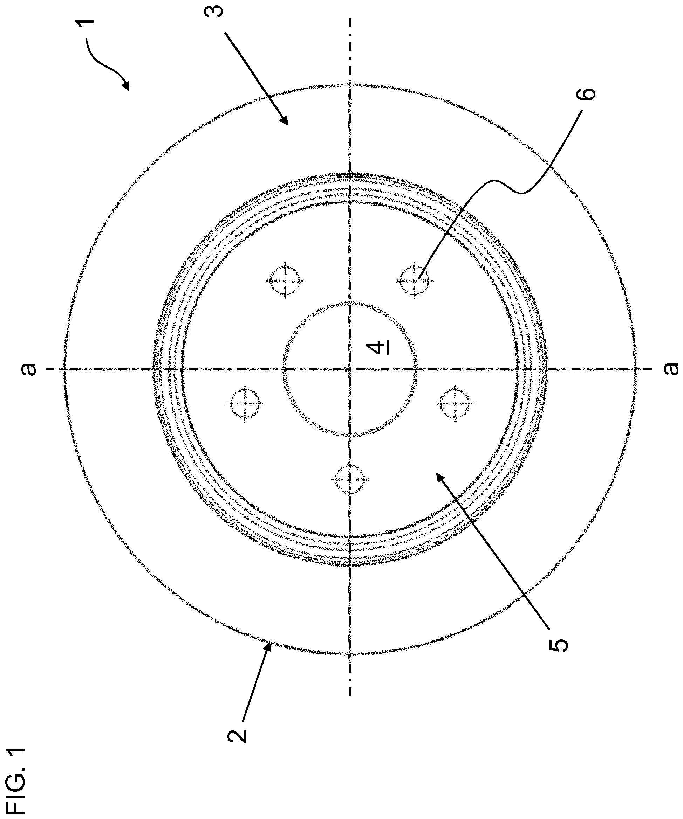

Fig. 1 ist eine schematische Darstellung einer erfindungsgemäßen Bremsscheibe 1 zu entnehmen. Diese weist einen kreisrunden Basiskörper 2 aus Gusseisen auf. Der Basiskörper 2 besitzt in typischer Weise einen umlaufenden äußeren Reibring 3, welcher für den Kontakt mit wenigstens einem nicht näher dargestellten Bremsklotz eines Bremssattels vorgesehen ist. Im Zentrum des Basiskörpers 2 ist eine Öffnung 4 vorgesehen, welche in einer Ausstellung 5 (Hut) des Basiskörpers 2 angeordnet ist. Um die Öffnung 4 herum sind in gleichmäßigen Abständen vorliegend fünf Durchgangslöcher 6 durch die Ausstellung 5 hindurch angeordnet. Besagte Durchgangslöcher 6 dienen der Aufnahme hier nicht näher dargestellter Radbolzen, über welche die Bremsscheibe 1 zusammen mit einem nicht gezeigten Rad mit einer ebenfalls nicht gezeigten Radnabe verbindbar ist.

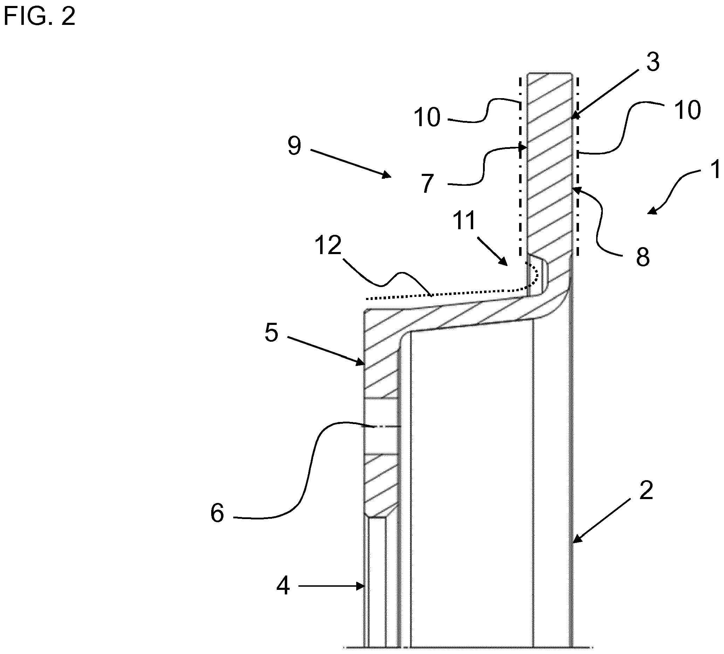

Eine Ebene a-a trennt mit Bezug auf die Darstellung von Fig. 1 die Bremsscheibe 1 in ihrer Vertikalen, wobei die nachfolgend beschriebene Fig. 2 die Ansicht auf einen Schnitt durch besagte Ebene a-a zeigt.

Fig. 2 ist ein Schnitt durch die Ebene a-a der Bremsscheibe 1 aus Fig. 1 zu entnehmen. Wie in dieser Darstellung ersichtlich, steht die Ausstellung 5 gegenüber dem Reibring 3 des Basiskörpers 2 vor. Der Reibring 3 umfasst zwei parallel zueinander ausgerichtete und voneinander abgewandte Reibflächen 7, 8. Diese setzen sich aus einer ersten Reibfläche 7 und einer zweiten Reibfläche 8 zusammen. Auf einer Oberfläche 9 des Basiskörpers 2 ist im Bereich der beiden Reibflächen 7, 8 eine Metall-Beschichtung 10 auf dem Reibring 3 ausgebildet. Bei dieser kann es sich beispielsweise um eine FeCrBSi-Beschichtung handeln. Vorliegend ist die Metall-Beschichtung 10 als strichpunktierte Linie angedeutet. Weiterhin ist in einem Übergangsbereich 11 zwischen dem Reibring 3 und der vorspringenden Ausstellung 5 des Basiskörpers 2 eine Email-Beschichtung 12 ausgebildet. Die Email-Beschichtung 12 ist vorliegend mit einer gepunkteten Linie angedeutet. Die Email-Beschichtung 12 kann natürlich auch durchgehend oder unterbrochen an der Ausstellung 5 angeordnet sein. Selbstverständlich ist es möglich, die Email-Beschichtung 12 beidseitig der Bremsscheibe, also innen und außen an den besagten Bereichen vorzusehen.

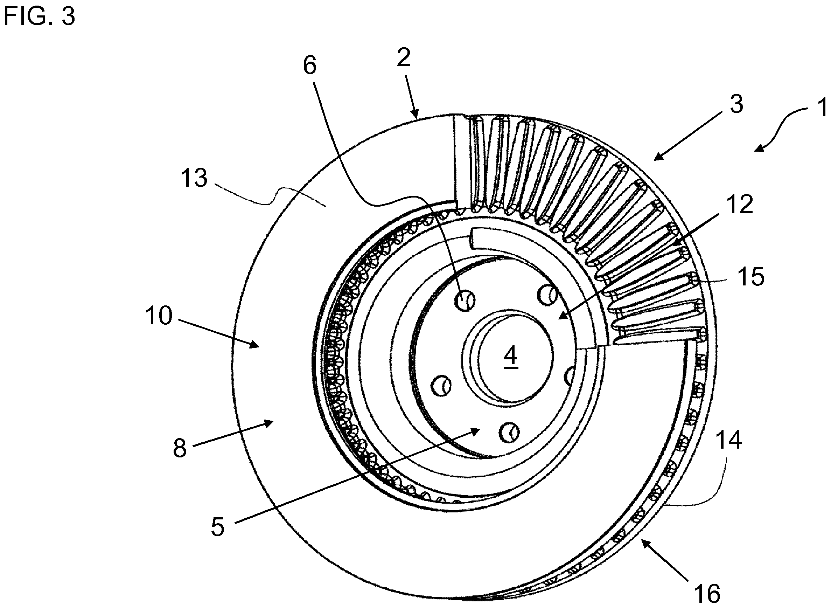

Fig. 3 zeigt eine alternative Ausgestaltung der Bremsscheibe aus den Fig. 1 und 2 in Form einer belüfteten; näherhin einer innenbelüfteten Bremsscheibe 1. Wie zu erkennen, weist der Basiskörper 2 hierbei zwei parallel zueinander verlaufende Deckscheiben 13, 14 auf, zwischen denen sich einzelne Rippen 15 erstrecken. Dabei dienen die Rippen 15 der Verbindung der beiden Deckscheiben 13, 14 untereinander und gleichzeitig deren Beabstandung. Hierfür sind die Rippen 15 allesamt ebenfalls zueinander beabstandet und radial auf die Öffnung 4 der Ausstellung 5 ausgerichtet. Durch die Beabstandung der beiden Deckscheiben 13, 14 und der Rippen 15 ergeben sich eine Vielzahl an radial verlaufenden Kühlkanälen 16. In dieser Ausgestaltung ist vorgesehen, dass die Email-Beschichtung 12 auch zwischen den Deckscheiben 13, 14 und den Rippen 15 ausgebildet ist, so dass sie die Begrenzungen der einzelnen Kühlkanäle 16 quasi benetzt.

### Bezugszeichenliste

- 1: Bremsscheibe
- 2: Basiskörper von 1
- 3: Reibring von 2
- 4: Öffnung in 2
- 5: Ausstellung von 2
- 6: Durchgangsloch in 5
- 7: erste Reibfläche von 3
- 8: zweite Reibfläche von 3
- 9: Oberfläche von 2
- 10: Metall-Beschichtung auf 3
- 11: Übergangsbereich zwischen 3 und 5
- 12: Email-Beschichtung auf 2
- 13: Deckscheibe von 3
- 14: Deckscheibe von 3
- 15: Rippe zwischen 13 und 14
- 16: Kühlkanal in 3

- a: Ebene durch 1

## Patentansprüche

1. Verfahren zur Herstellung einer Bremsscheibe (1) für ein Fahrzeug, bei welchem auf einem Basiskörper (2) der Bremsscheibe (1) eine Email-Beschichtung (12) ausgebildet wird, wobei der Basiskörper (2) Reibflächen (7,8) und eine ausgestellte Verbindungsfläche (5) aufweist,
umfassend zumindest folgende Schritte:
- Aufrauen der Reibflächen (7,8);
- Ausbilden einer mit dem Basiskörper (2) metallurgisch verbindbaren Metall-Beschichtung (10) als korrosions- und/oder verschleißbeständige Beschichtung auf den aufgerauten Reibflächen (7,8);
- Aufbringen eines Email-Schlickers als Korrosionsschutzbeschichtung in einem Übergang zwischen den Reibflächen (7,8) und der ausgestellten Verbindungsfläche (5);
- Trocknen des aufgebrachten Email-Schlickers; und
- Erhitzen des mit der Metall-Beschichtung (10) und dem getrockneten Email-Schlicker versehenen Basiskörpers (2) zur Ausbildung der Email-Beschichtung (12) und zur metallurgischen Verbindung der Metall-Beschichtung (10) mit dem Basiskörper (2).

2. Verfahren nach Anspruch 1, **dadurch gekennzeichnet, dass**
die Metall-Beschichtung (10) durch ein thermisches Spritzverfahren ausgebildet wird.

3. Verfahren nach Anspruch 1 oder 2, **dadurch gekennzeichnet, dass**
die Metall-Beschichtung (10) in einer Schichtdicke von 150 µm bis 350 µm ausgebildet wird.

4. Verfahren nach einem der vorhergehenden Ansprüche,
**dadurch gekennzeichnet, dass**
zum Aufrauen der Reibflächen (7,8) ein Haftgewinde in die Oberfläche (9) der Reibflächen (7.8) eingebracht wird und/oder die Oberfläche (9) der Reibflächen (7.8) durch Korundstrahlen vorbehandelt wird.

5. Verfahren nach einem der vorhergehenden Ansprüche,
**dadurch gekennzeichnet, dass**
das Trocknen des aufgebrachten Email-Schlickers in einem Ofen durchgeführt wird, insbesondere bei 90°C.

6. Verfahren nach einem der vorhergehenden Ansprüche,
**dadurch gekennzeichnet, dass**
das Erhitzen des mit der Metall-Beschichtung (10) und dem getrockneten Email-Schlicker versehenen Basiskörpers (2) in einem Temperaturbereich von 800°C bis 900°C durchgeführt wird, insbesondere unter Einsatz eines Schutzgases.

7. Verfahren nach einem der vorhergehenden Ansprüche,
**dadurch gekennzeichnet, dass**
die Metall-Beschichtung (10) mechanisch nachbearbeitet wird.

8. Bremsscheibe für ein Fahrzeug, hergestellt mit einem Verfahren nach einem der vorhergehenden Ansprüche, umfassend einen Basiskörper (2), auf dessen Oberfläche (9) bereichsweise eine Email-Beschichtung (12) ausgebildet ist, wobei der Basiskörper (2) Reibflächen (7,8) und eine ausgestellte Verbindungsfläche (5) aufweist und wobei neben der in einem Übergang zwischen den Reibflächen (7,8) und der ausgestellten Verbindungsfläche (5) angeordneten Email-Beschichtung (12) zusätzlich eine Metall-Beschichtung (10) an den Reibflächen (7,8) des Basiskörpers (2) ausgebildet ist, wobei die Metall-Beschichtung (10) metallurgisch mit dem Basiskörper (2) verbindbar ist.

9. Bremsscheibe nach Anspruch 8, **dadurch gekennzeichnet, dass**
die Metall-Beschichtung (10) eine Haftfestigkeit zur Oberfläche (9) der Reibflächen (7.8) des Basiskörpers (2) von größer 70 MPa aufweist.

10. Bremsscheibe nach Anspruch 8 oder 9, **dadurch gekennzeichnet, dass**
die Metall-Beschichtung (10) zumindest an voneinander abgewandten Reibflächen (7, 8) eines Reibrings (3) des Basiskörpers (2) ausgebildet ist.

## Claims

1. Method for producing a brake disk (1) for a vehicle, in which an enamel coating (12) is formed on a main body (2) of the brake disk (1), wherein the main body (2) has friction surfaces (7, 8) and a projecting connecting surface (5),
comprising at least the following steps:
- roughening of the friction surfaces (7, 8);
- forming a metal coating (10), which can be joined metallurgically to the main body (2), as corrosion and/or wear-resistant coating on the roughened friction surfaces (7, 8);
- applying an enamel slip as anticorrosion coating in a transition between the friction surfaces (7, 8) and the projecting connecting surface (5);
- drying the applied enamel slip; and
- heating the main body (2) provided with the metal coating (10) and the dried enamel slip to form the enamel coating (12) and to join the metal coating (10) metallurgically to the main body (2).

2. Method according to Claim 1, **characterized in that**
the metal coating (10) is formed by a thermal spraying method.

3. Method according to Claim 1 or 2, **characterized in that**
the metal coating (10) is formed in a layer thickness of from 150 µm to 350 µm.

4. Method according to one of the preceding claims, **characterized in that**
an anchoring thread is introduced into the surface (9) of the friction surfaces (7, 8) and/or the surface (9) of the friction surfaces (7, 8) is pretreated by means of corundum blasting in order to roughen the friction surfaces (7, 8).

5. Method according to one of the preceding claims, **characterized in that**
the drying of the applied enamel slip is carried out in a furnace, in particular at 90°C.

6. Method according to one of the preceding claims, **characterized in that**
the heating of the main body (2) provided with the metal coating (10) and the dried enamel slip is carried out in a temperature range of from 800°C to 900°C, in particular using a protective gas.

7. Method according to one of the preceding claims, **characterized in that**
the metal coating (10) is finished mechanically.

8. Brake disk for a vehicle, produced by means of a method according to one of the preceding claims, comprising a main body (2), on the surface (9) of which an enamel coating (12) is formed, in some area or areas,
wherein the main body (2) has friction surfaces (7, 8) and a projecting connecting surface (5)
and wherein,
apart from the enamel coating (12) arranged in a transition between the friction surfaces (7, 8) and the projecting connecting surface (5), a metal coating (10) is additionally formed on the friction surfaces (7, 8) of the main body (2), wherein the metal coating (10) can be joined metallurgically to the main body (2).

9. Brake disk according to Claim 8, **characterized in that**
the metal coating (10) has an adhesive strength of greater than 70 MPa in relation to the surface (9) of the friction surfaces (7, 8) of the main body (2).

10. Brake disk according to Claim 8 or 9, **characterized in that**
the metal coating (10) is formed at least on friction surfaces (7,8) of a friction ring (3) of the main body (2) which face away from one another.

## Revendications

1. Procédé de fabrication d'un disque de frein (1) pour un véhicule, dans lequel on forme un revêtement d'émail (12) sur un corps de base (2) du disque de frein (1), dans lequel le corps de base (2) présente des faces de friction (7, 8) et une face d'assemblage déportée (5), comprenant au moins les étapes suivantes:
- dépolir les faces de friction (7, 8);
- former un revêtement métallique (10) pouvant être lié métallurgiquement au corps de base (2) comme revêtement résistant à la corrosion et/ou à l'usure sur les faces de friction dépolies (7, 8);
- déposer une barbotine d'émail comme revêtement de protection contre la corrosion dans une transition entre les faces de friction (7, 8) et la face d'assemblage déportée (5);
- sécher la barbotine d'émail déposée; et
- chauffer le corps de base (2) muni du revêtement métallique (10) et de la barbotine d'émail séchée pour la formation du revêtement d'émail (12) et pour la liaison métallurgique du revêtement métallique (10) avec le corps de base (2).

2. Procédé selon la revendication 1, **caractérisé en ce que** l'on forme le revêtement métallique (10) par un procédé de projection à chaud.

3. Procédé selon la revendication 1 ou 2, **caractérisé en ce que** l'on forme le revêtement métallique (10) avec une épaisseur de couche de 150 µm à 350 µm.

4. Procédé selon l'une quelconque des revendications précédentes, **caractérisé en ce que** pour dépolir les faces de friction (7, 8) on pratique un filet d'adhérence dans la surface (9) des faces de friction (7, 8) et/ou on prétraite la surface des faces de friction (7, 8) au moyen de jets de corindon.

5. Procédé selon l'une quelconque des revendications précédentes, **caractérisé en ce que** l'on effectue le séchage de la barbotine d'émail déposée dans un four, en particulier à 90°C.

6. Procédé selon l'une quelconque des revendications précédentes, **caractérisé en ce que** l'on effectue le chauffage du corps de base (2) muni du revêtement métallique (10) et de la barbotine d'émail séchée dans une plage de température de 800°C à 900°C, en particulier avec utilisation d'un gaz protecteur.

7. Procédé selon l'une quelconque des revendications précédentes, **caractérisé en ce que** l'on effectue un réusinage mécanique du revêtement métallique (10).

8. Disque de frein pour un véhicule, fabriqué par un procédé selon l'une quelconque des revendications précédentes, comprenant un corps de base (2), dont la surface (9) porte localement un revêtement d'émail (12), dans lequel le corps de base (2) présente des faces de friction (7, 8) et une face d'assemblage déportée (5) et dans lequel, en plus d'un revêtement d'émail (12) disposé dans une transition entre les faces de friction (7, 8) et la face d'assemblage déportée (2), un revêtement métallique (10) est en outre formé sur les faces de friction (7, 8) du corps de base (2), dans lequel le revêtement métallique (10) peut être lié métallurgiquement au corps de base (2).

9. Disque de frein selon la revendication 8, **caractérisé en ce que** le revêtement métallique (10) présente une adhérence à la surface (9) des faces de friction (7, 8) du corps de base (2) supérieure à 70 MPa.

10. Disque de frein selon la revendication 8 ou 9, **caractérisé en ce que** le revêtement métallique (10) est formé au moins sur des faces de friction (7, 8) opposées l'une à l'autre d'un anneau de friction (3) du corps de base (2).
